# EUROPEAN PATENT SPECIFICATION

(11) **EP 1 240 058 B1**
(45) Date of publication and mention of the grant of the patent: **08.12.2004**
(21) Application number: 00970788.6
(22) Date of filing: 10.10.2000
(51) Int. Cl.: B60R 22/24

(54) **VEHICLE SEAT BELT SYSTEM**
FAHRZEUG- SICHERHEITSGURTSYSTEM
SYSTEME DE CEINTURE DE SECURITE DE VEHICULE

(30) Priority: 23.12.1999 GB 9930521
(43) Date of publication of application: 18.09.2002
(73) Proprietor: KEY SAFETY SYSTEMS, INC., Sterling Heights, Michigan 48314 (US)
(72) Inventor: SMITHSON, Alan, Carlisle, Cumbria CA4 8HD (GB); TAYLOR, John, Penrith, Cumbria CA11 9LW (GB)
(74) Representative: Gislon, Gabriele
(86) International application number: PCT/US2000/028099
(87) International publication number: WO 2001/047754

(56) References cited:
- EP-A- 0 494 009
- EP-A- 0 769 432
- DE-A- 4 415 635
- FR-A- 2 701 906

## Description

The present invention relates generally to seat belts and more specifically to roof mounted seat belt systems.

Seat belt systems comprise a length of seat belt webbing wound on a rotatable spool, forming part of a seat belt retractor which controls payout of the webbing and a buckling mechanism comprising a buckle tongue, fixed to an end of the webbing which locks into a buckle typically attached to the floor of the vehicle. The seat belt retractor must be mounted to a load bearing part of a vehicle since it takes the strain in the event of a crash. Usually the seat belt retractor is mounted to a side pillar; however in the center rear seat in vehicles that are large enough to carry three rear passengers, there is no convenient pillar and the seat belt retractor is usually mounted to the roof. The buckle tongue then tends to hang down when the seat belt is not in use and is unsightly and potentially hazardous. In a typical center rear seat arrangement, two buckle tongues are provided on the webbing so as to fit into respective buckles on each side of the center rear passenger, so that the belt can be completely detached from the seat and permit easy access to passengers across the width of the rear seat or the folding or removal of the seat.

FR 2 701 906 concerns a two buckle tongues seat belt system for vehicles centre rear seat according to the preamble of claim 1 which comprises a retractor, a strap guide and an anchorage to secure the two buckle tongues, all of them being fixed longitudinally and in succession to the structure of the roof of the vehicle and covered by a storage device.

EP 0 769 432 discloses a storing device for a two buckle tongues vehicle seat belt arrangement which provides a magnetised inclusion as retaining means for a seat belt buckle tongue.

The two buckle tongues present even more of a hazard if left to hang from the roof and the extra weight can cause the webbing to pull out from the seat belt retractor.

This and other drawbacks are solved by way of a seat belt system according to claim 1.

Preferably the seat belt system comprises two buckle tongues attached at the end region of the webbing, at least one buckle tongue being slidable on the webbing to adjust its spacing from the other buckle tongue.

According to one embodiment of the invention, the means for holding the buckle tongue or buckle tongues in the housing comprises mechanical clips, but magnetic catches may alternatively be used.

### Brief Description of the Drawings

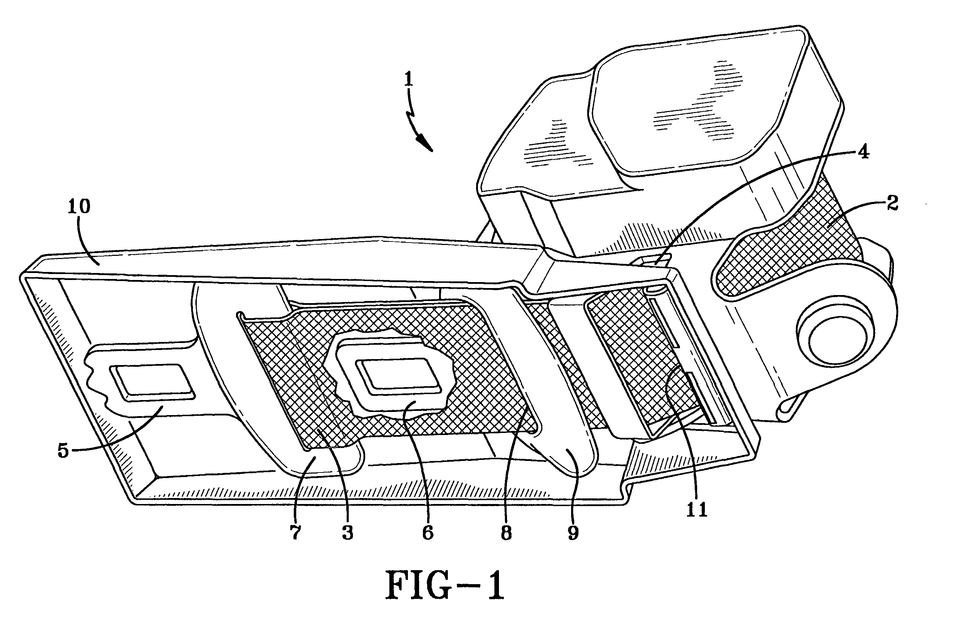

FIG.1 is a perspective view from below of a seat belt system according to the present invention; and
FIG.2 is a plan view from below of the arrangement of FIG.1.

### Detailed Description of the Invention

The figures show a seat belt retractor 1 that is mountable in the roof of a vehicle for a center rear seat passenger. The seat belt retractor 1 comprises a spool (not shown) on which seat belt webbing 2 is wound. One end of the webbing is attached to the spool and the other end 3 exits the frame of the seat belt retractor through a slot 4. The webbing outside the seat belt retractor is attached to two buckle tongues 5, 6. One buckle tongue 5 is attached to the end of the webbing 3 by being fastened around a bar 7 integral with or attached to the buckle tongue 5. The second buckle tongue 6 is located on the webbing a short distance away from the first buckle tongue and is slidable on the webbing since the webbing passes through a slot 8 in a plastic part 9 molded to the metal buckle tongue 6.

The two buckle tongues 5, 6 are located in a housing 10 that is a relatively shallow member constructed as a clip-on plastic part. According to a preferred embodiment of the invention, the means for attaching the housing in a vehicle comprises a mechanical clip. One part of the clip may be located on the housing and the other part may be located on the seat belt retractor or alternatively on the roof of the vehicle. Preferably, the housing clips directly to the seat belt retractor and may be assembled thereto after the seat belt retractor has been installed in a vehicle.

The seat belt webbing 2 exiting the seat belt retractor passes through an opening 11 in the back wall of the housing 10. When not in use the buckle tongues 5, 6 are held in position in the housing by magnets, magnetic catches or alternatively mechanical clips (not shown).

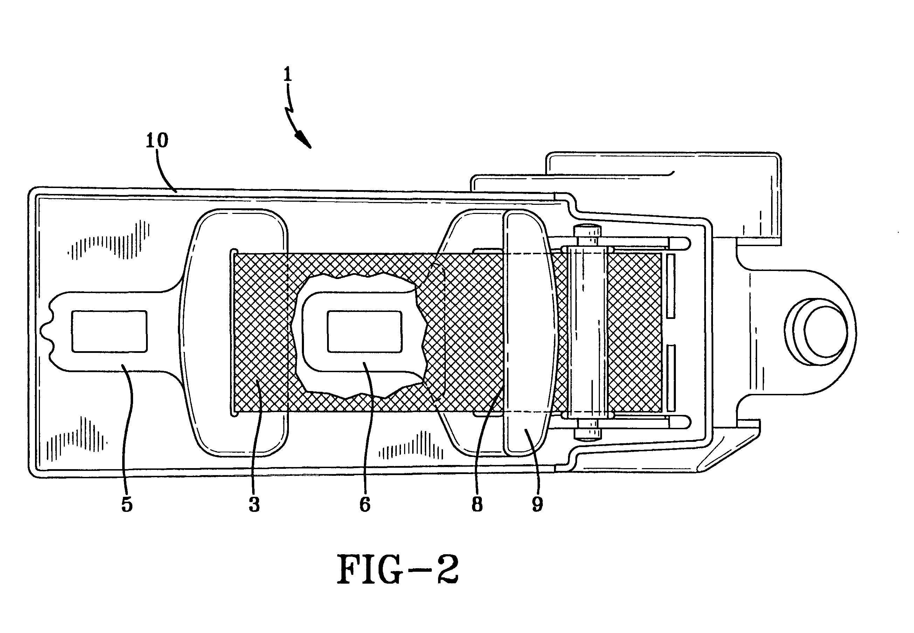

In FIG.2, the same embodiment is illustrated from a slightly different angle. However the two buckle tongues are both shown clearly in FIG.2 since the webbing is shown only faintly.

## Claims

1. A seat belt system comprising
a roof mountable seat belt retractor (1) having a length of seat belt webbing (2) wound thereon and at least one buckle tongue (5, 6) attached at an end region (3) of the webbing (2), a housing (10) for said at least one buckle tongue (5, 6) defining a hollow space into which said buckle tongue (5, 6) fits, means for attaching the housing (10) in a vehicle, and means for holding said at least one buckle tongue (5, 6) in the housing (10);
**characterized in that**
said means for attaching the housing (10) in a vehicle comprise a mechanical clip, and
said mechanical clip is arranged and adapted to attach the housing (10) to the seat belt retractor (1).

2. The seat belt system according to Claim 1 wherein the seat belt system comprises two buckle tongues (5, 6) attached to an end region of the seat belt webbing (2).

3. The seat belt system according to Claim 2 wherein. at least one buckle tongue (6) is arranged to be slidable on the seat belt webbing (2) to adjust its spacing from the other buckle tongue (5).

4. The seat belt system according to Claim 1 wherein the housing (10) is arranged and adapted to clip directly to the seat belt retractor (1) after the seat belt retractor (1) has been installed in a vehicle.

5. The seat belt system according to any of Claims 1 to 4 wherein the means for holding the buckle tongue (5) or each buckle tongue (5, 6) in the housing (10) comprises a mechanical clip.

6. The seat belt system according to any of Claims 1 to 5 wherein the means for holding the buckle tongue (5) or each buckle tongue (5, 6) in the housing (10) comprises a magnetic catch.

## Patentansprüche

1. Sicherheitsgurtsystem, das aufweist:
einen am Dach montierbaren Sicherheitsgurtaufroller (1) mit einer darauf aufgewickelten Länge des Sicherheitsgurtbandes (2) und mindestens einer Gurtschloßzunge (5, 6), die an einem Endbereich (3) des Bandes (2) befestigt ist; ein Gehäuse (10) für die mindestens eine Gurtschloßzunge (5, 6), das einen hohlen Raum definiert, in den die Gurtschloßzunge (5, 6) paßt; eine Einrichtung für das Befestigen des Gehäuses (10) in einem Fahrzeug; und eine Einrichtung für das Halten der mindestens einen Gurtschloßzunge (5, 6) im Gehäuse (10);
**dadurch gekennzeichnet, daß**
die Einrichtung für das Befestigen des Gehäuses (10) in einem Fahrzeug eine mechanische Klemme aufweist, und daß die mechanische Klemme angeordnet und angepaßt ist, um das Gehäuse (10) am Sicherheitsgurtaufroller (1) zu befestigen.

2. Sicherheitsgurtsystem nach Anspruch 1, bei dem das Sicherheitsgurtsystem zwei Gurtschloßzungen (5, 6) aufweist, die an einem Endbereich des Sicherheitsgurtbandes (2) befestigt sind.

3. Sicherheitsgurtsystem nach Anspruch 2, bei dem mindestens eine Gurtschloßzunge (6) verschiebbar am Sicherheitsgurtband (2) angeordnet ist, um ihren Abstand von der anderen Gurtschloßzunge (5) zu regulieren.

4. Sicherheitsgurtsystem nach Anspruch 1, bei dem das Gehäuse (10) angeordnet und angepaßt ist, um direkt am Sicherheitsgurtaufroller (1) festzuklemmen, nachdem der Sicherheitsgurtaufroller (1) in einem Fahrzeug installiert wurde.

5. Sicherheitsgurtsystem nach einem der Ansprüche 1 bis 4, bei dem die Einrichtung für das Halten der Gurtschloßzunge (5) oder einer jeden Gurtschloßzunge (5, 6) im Gehäuse (10) eine mechanische Klemme aufweist.

6. Sicherheitsgurtsystem nach einem der Ansprüche 1 bis 5, bei dem die Einrichtung für das Halten der Gurtschloßzunge (5) oder einer jeden Gurtschloßzunge (5, 6) im Gehäuse (10) eine Magnetsperre aufweist.

## Revendications

1. Système de ceinture de sécurité, comprenant:
un rétracteur de la ceinture de sécurité (1) pouvant être monté sur le toit, comportant une longueur de la sangle de la ceinture de sécurité (2) qui y est enroulée, et au moins une languette de boucle (5, 6) fixée au niveau d'une région d'extrémité (3) de la sangle (2), un boîtier (10) pour ladite au moins une languette de boucle (5, 6), définissant un espace creux dans lequel est ajustée ladite languette de boucle (5, 6), un moyen pour fixer le boîtier (10) dans un véhicule et un moyen pour retenir ladite au moins une languette de boucle (5, 6) dans le boîtier (10);
**caractérisé en ce que**
ledit moyen pour fixer le boîtier (10) dans un véhicule est constitué par une bride mécanique, ladite bride mécanique étant agencée et adaptée de sorte à fixer le boîtier (10) sur le rétracteur de la ceinture de sécurité (1).

2. Système de ceinture de sécurité selon la revendication 1, dans lequel le système de ceinture de sécurité comprend deux languettes de boucle (5, 6) fixées sur une région d'extrémité de la sangle de la ceinture de sécurité (2).

3. Système de ceinture de sécurité selon la revendication 2, dans lequel au moins une languette de boucle (6) est agencée de sorte à pouvoir glisser sur la sangle de la ceinture de sécurité (2) pour ajuster son espacement par rapport à l'autre languette de boucle (5).

4. Système de ceinture de sécurité selon la revendication 1, dans lequel le boîtier (10) est agencé et adapté de sorte à être fixé directement par la bride sur le rétracteur de la ceinture de sécurité (1) après l'installation du rétracteur de la ceinture de sécurité (1) dans un véhicule.

5. Système de ceinture de sécurité selon l'une quelconque des revendications 1 à 4, dans lequel le moyen destiné à retenir la languette de boucle (5) ou chaque languette de boucle (5, 6) dans le boîtier (10) comprend une bride mécanique.

6. Système de ceinture de sécurité selon l'une quelconque des revendications 1 à 5, dans lequel le moyen destiné à retenir la languette de boucle (5) ou chaque languette de boucle (5, 6) dans le boîtier (10) comprend un cliquet magnétique.
